# EUROPEAN PATENT SPECIFICATION

(11) **EP 3 476 621 B1**
(45) Date of publication and mention of the grant of the patent: **26.02.2020**
(21) Application number: 18199269.4
(22) Date of filing: 09.10.2018
(51) Int. Cl.: B60B 21/06, B60B 1/00, B60B 5/02, B60B 25/02

(54) **JOINING ELEMENT FOR BICYCLE RIMS, BICYCLE RIM INCORPORATING SUCH A JOINING ELEMENT AND METHOD FOR PRODUCING A RESPECTIVE RIM**
VERBINDUNGSELEMENT FÜR FAHRRADFELGEN, FAHRRADFELGE MIT SOLCH EINEM VERBINDUNGSELEMENT UND VERFAHREN ZUR HERSTELLUNG EINER SOLCHEN FELGE
ÉLÉMENT D'ASSEMBLAGE POUR JANTES DE BICYCLETTE, JANTE DE BICYCLETTE INCORPORANT UN TEL ÉLÉMENT D'ASSEMBLAGE ET PROCÉDÉ DE FABRICATION D'UNE TELLE JANTE

(30) Priority: 27.10.2017 IT 201700122815
(43) Date of publication of application: 01.05.2019
(73) Proprietor: Ambrosio S.r.l. Dei F.lli Marzorati, 20020 Solaro (Milano) (IT)
(72) Inventor: LEO, Leonardo Claudio, 20020 Solaro (Milano) (IT)
(74) Representative: Petruzziello, Aldo

(56) References cited:
- DE-U1- 20 180 376
- US-A1- 2009 096 277
- US-A1- 2016 121 649
- US-B1- 6 398 313

## Description

The present invention relates to a joining element for bicycle rims, in particular bicycle rims obtained from tubular metal section or bar according to the preamble of independent claim 1 and a bicycle rim comprising such a joining element. Furthermore, the invention relates to a method for producing a respective joining element defined by the features of independent claim 8.

As is known, these rims are formed from a tubular bar or hollow section of metal material of a length equal to the development of the circumference of the rim which is to be made, bar which is worked and bent by means of a calender, which gives it the rim configuration with the opposite ends which have then to be joined to give continuity.

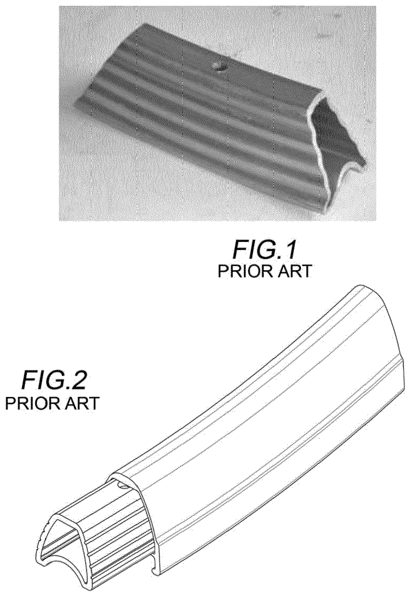

The joining of the two ends of the bar in order to obtain the finished rim takes place by means of a curved joining element in metal material, also of tubular type, such as for example shown in Figure 1, reproducing the profile of the inner cavity of the rim. This joining element is inserted in the two ends of the bent bar after having applied a two-component glue in the inner cavity of the bar and/or on the outer surface of the joining element.

The complete closure of the rim takes place by means of a joining machine which tightens the adjacent ends of the rim on the joining element, held still in a central position with respect to these ends.

Figure 2 shows an end portion of a rim, with the joining element inserted therein.

The solution described previously has various critical factors.

The joining element is rigid and therefore does not allow adaptations to inner cavities of the rim of slightly different dimensions also only due to machining tolerances. For the same reason its insertion inside the rim is somewhat difficult.

This joining element is then of considerable length, with the risk of interfering with the holes of the spokes, if the latter are in a considerable number, for example equal to or higher than thirty-two.

The length of the joining element likewise determines an increase in the weight, which is not desirable, above all in competition bicycles, where the tendency is that of making them increasingly lightweight.

US 2016/0121649 A1 describes a joining element in aluminium for connecting the opposite ends of a tubular profile bicycle rim. According to a first embodiment, blind longitudinal cuts are provided in order to make flat profile parts between these cuts independently flexible. In a second embodiment through longitudinal grooves are provided to make tubular profile parts between these grooves independently flexible.

The object of the invention is that of eliminating the disadvantages of the joining elements previously described.

More particularly an object of the invention is that of providing a joining element for bicycle rims which can easily be inserted in the ends of the rim and which compensates possible machining tolerances.

Another object of the invention is that of providing such a joining element which is of smaller dimensions with respect to the joining elements of the prior art and of low weight.

Yet another object of the invention is that of providing such a joining element which auto-blocks in the end of the rim, entering for the correct length.

These and other objects of the joining element for bicycle rims according to the invention are achieved with the features of the appended independent claims 1 and 8.

Advantageous embodiments of the invention are stated in the dependent claims.

Advantageously, the joining element for tubular profile bicycle rims according to the invention, apt to be inserted in the ends of the rim in order to allow the joining thereof following the application of a closing force, is made in two separate parts, joined by two elastically deformable transverse connecting elements, having respective central parts (14) with opposite concavities.

Further features of the invention will be made clearer by the following detailed description, referred to one of its embodiments purely by way of a non-limiting example, illustrated in the accompanying drawings, in which:
Figure 1 is a perspective view of a joining element for bicycle rims according to the prior art;
Figure 2 shows the joining element of Figure 1 inserted in one of the ends of the rim before performing the joining;
Figure 3 shows schematically in plan view a bicycle rim before the closure of its ends, with inserted in one of them the joining element according to the invention;
Figure 4 is an enlargement of the end of the rim of Figure 3, with a portion cut away, in order to show the joining element inserted therein;
Figure 5 is an enlarged axonometric view of the end of the rim of Figure 4, with the joining element inserted;
Figure 6 is an axonometric view of the joining zone of the rim with a portion of one of the ends cut away, in order to show the internal joining element;
Figure 7 is an axonometric view of only the joining element;
Figure 8 is an end or cross section view of the joining element of Figure 7;
Figure 9 is a side profile view of the joining element of Figure 6.

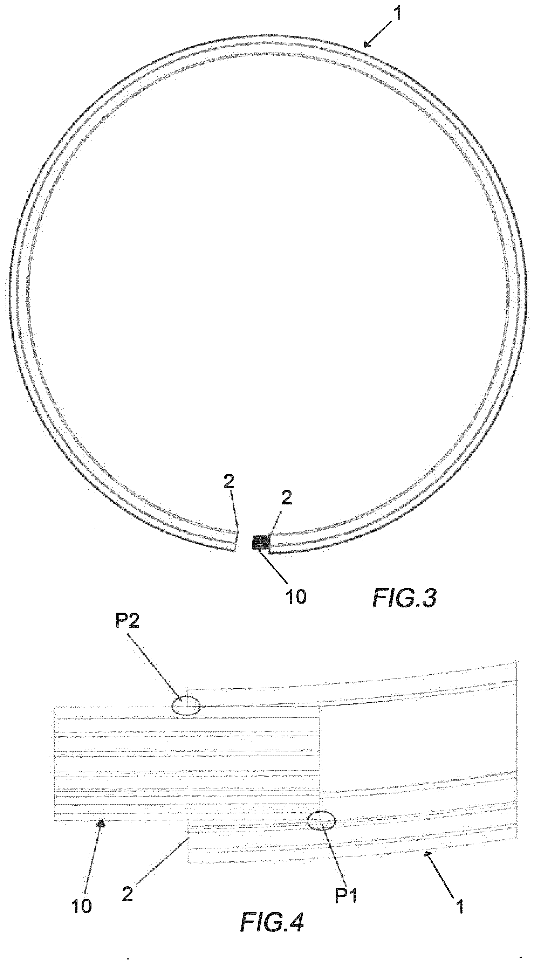

Figure 3 shows schematically a bicycle rim, before the joining of its ends, denoted overall by reference numeral 1.

The rim 1, in a manner in itself known, is obtained from a tubular bar or hollow section, which in a manner in itself known is calendered until obtaining the circular shape shown in Figure 3.

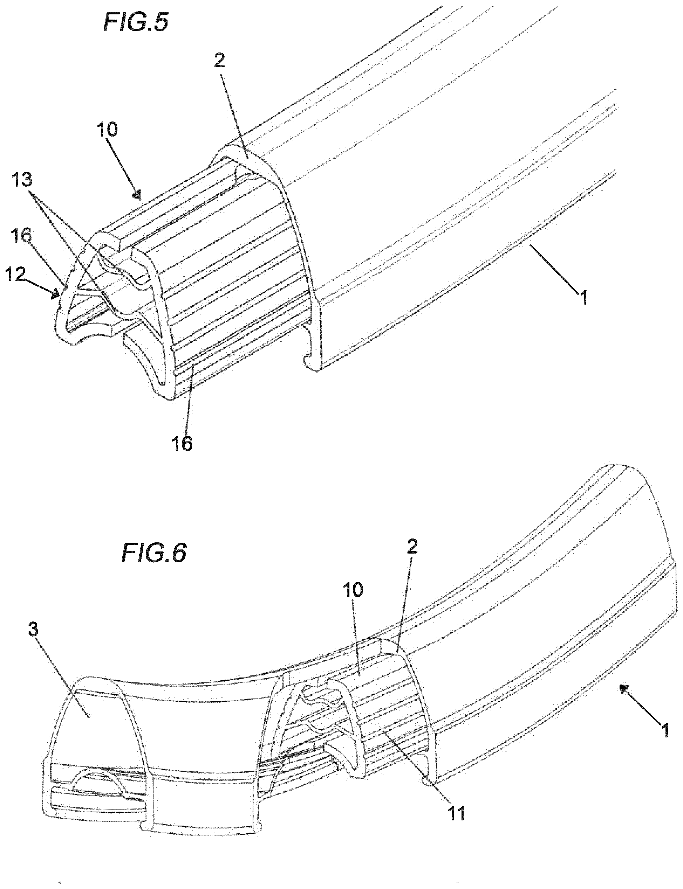

The closure of the rim 1, that is the joining between the two opposite ends, denoted both by reference numeral 2, takes place by means of the joining element 10 according to the invention, which is inserted in the cavity 3 of said ends 2, after interposition of a structural glue, such as a two-component adhesive 11 (see in particular Figure 6) between the surfaces in contact, that is between the outer surface of the joining element 10 and the inner surface of the cavity 3.

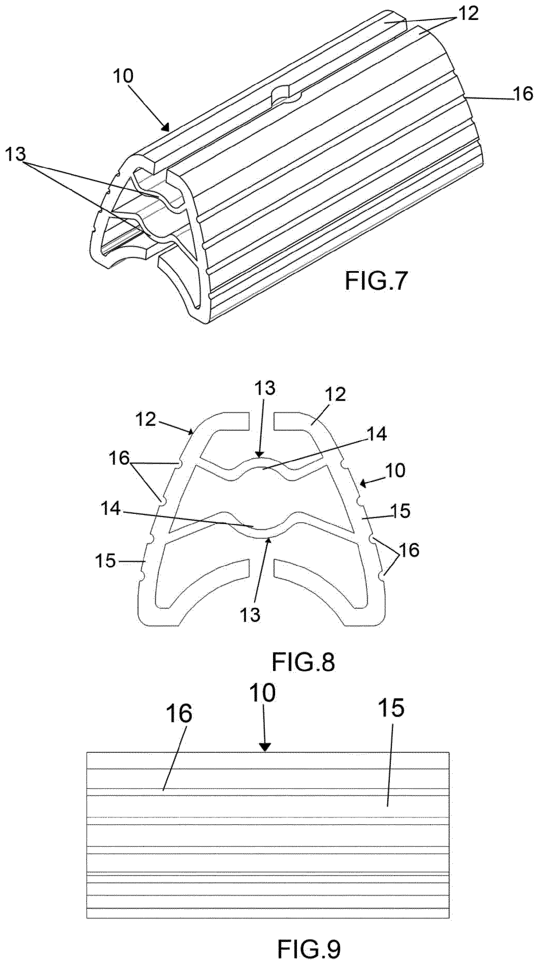

The joining element 10 according to the invention is shown more clearly in Figures 7-9.

Unlike joining elements of the prior art, it has a perfectly rectilinear shape, rather than curved as can be seen in Figure 9, and a spring shape, which gives it a certain elasticity.

The joining element 10 is advantageously in plastic material and is made in two separate parts 12, perfectly symmetrical one in relation to the other and joined by transverse connecting elements 13.

In the embodiment shown, two joining elements 13 are shown, which develop for the entire length of the element 10, and have central portions 14 with opposite concavities.

The two parts 12 of the joining element 10 have a shape corresponding to the inner profile of the cavity of the rim 1, and have on the sides 15 a series of longitudinal grooves 16, at which said structural glue 11 can be applied in the phase of joining of the ends 2 of the rim.

The spring configuration of the joining element 10 allows an easy insertion of the same in one of the ends 2 of the rim before closure, compensating possible machining tolerances, adapting to the inner dimensions of the same.

The straight geometry of the joining element 10 allows the insertion thereof in one of the ends 2 of the rim 1 until reaching the curvature of the rim. In practice, as shown in Figure 4, the insertion of the joining element 10 in the end 2 of the rim 1 stops when the end of the rim starts to curve on the basis of its radius of curvature. The situation is shown in Figure 4, in which the points PI, P2 indicate the points of contact or of interference between the rectilinear joining element 10 and the curvature of the rim 1.

Once the joining element 10 has been introduced inside the other end 2, it will be subjected to the closing force of the rim (Figure 6) and the presence of the spring connecting elements 13 will allow the deformation of the joining element, widening it and sending it into contact with the inner walls of the rim, along which the abovementioned structural glue has been placed.

From what is disclosed, the advantages appear clear of the joining element 10 according to the invention.

It allows in fact an extremely reliable closure of the rim, auto-adapting to the inner contact surfaces.

The plastic material of the joining element and its rectilinear geometry allow a reduction in the length and in the weight thereof, and the avoiding of any interference with the holes of the spokes, also in the case wherein they are in a high number (thirty-two or more).

Naturally the invention is not limited to the particular embodiment described previously and illustrated in the accompanying drawings, but numerous detail changes may be made thereto, within the reach of the person skilled in the art, without thereby departing from the scope of the same invention, as defined in the appended claims.

## Claims

1. Joining element (10) for tubular profile bicycle rims (1) apt to be inserted in the ends (2) of the rim in order to allow the joining thereof following the application of a closing force, **characterised in that** it is made in two separate parts (12), joined by two elastically deformable transverse connecting elements (13), having respective central parts (14) with opposite concavities.

2. Joining element (10) according to claim 1, **characterised in that** it has a perfectly rectilinear geometry.

3. Joining element (10) according to claim 1 or 2, **characterised in that** said two parts (12) are perfectly symmetrical one in relation to the other and reproduce the inner profile of the rim cavity (1).

4. Joining element (10) according to any one of the preceding claims, **characterised in that** longitudinal grooves (16) are provided on the sides (15) of said two parts (12) of the element (10).

5. Joining element (10) according to any one of the preceding claims, **characterised in that** it is made in plastic material.

6. Joining element (10) according to claim 4 or 5, wherein said longitudinal grooves (16) are suitable for receiving a structural glue, such as a two-component adhesive.

7. Bicycle rim (1) **characterised in that** it has internally at its jointed ends (2) a joining element (10) according to any one of the preceding claims.

8. Method for producing a bicycle rim (1) from a tubular bar, comprising the steps consisting in:
- calendering the tubular bar to give it a circular shape;
- inserting in a first of the two opposite ends (2) of the tubular bar a joining element (10) according to any one of claims 1 to 6 until it goes to interfere with the curvature of the rim;
- inserting the portion of said joining element (10) protruding from said first end in the other end of the rim;
- applying a tightening force for the closure of the rim.

9. Method according to claim 8, wherein the application of a structural glue is provided internally to the ends (2) of the rim and/or on the outer surface of the joining element (10) prior to insertion thereof in said ends.

## Patentansprüche

1. Verbindungselement (10) für Fahrradfelgen mit rohrförmigem Profil (1), das in die Enden (2) der Felge eingesetzt werden kann, um deren Verbindung nach dem Aufbringen einer Schließkraft zu ermöglichen, **dadurch gekennzeichnet, dass** es aus zwei getrennten Teilen (12) besteht, die durch zwei elastisch verformbare Querverbindungselemente (13) verbunden sind, welche jeweilige Mittelteile (14) mit gegenüberliegenden Konkavitäten aufweisen.

2. Verbindungselement (10) nach Anspruch 1, **dadurch gekennzeichnet, dass** es eine perfekt geradlinige Geometrie aufweist.

3. Verbindungselement (10) nach Anspruch 1 oder 2, **dadurch gekennzeichnet, dass** die beiden Teile (12) zueinander perfekt symmetrisch sind und das Innenprofil des Felgenhohlraums (1) wiedergeben.

4. Verbindungselement (10) nach einem der vorhergehenden Ansprüche, **dadurch gekennzeichnet, dass** an den Seiten (15) der beiden Teile (12) des Elements (10) Längsnuten (16) vorgesehen sind.

5. Verbindungselement (10) nach einem der vorhergehenden Ansprüche, **dadurch gekennzeichnet, dass** es aus Kunststoff hergestellt ist.

6. Verbindungselement (10) nach Anspruch 4 oder 5, wobei die Längsnuten (16) sich zur Aufnahme eines Strukturklebers, beispielsweise eines Zweikomponentenklebers, eignen.

7. Fahrradfelge (1) **dadurch gekennzeichnet, dass** sie innen an ihren zusammengefügten Enden (2) ein Verbindungselement (10) nach einem der vorhergehenden Ansprüche aufweist.

8. Verfahren zur Herstellung einer Fahrradfelge (1) aus einer rohrförmigen Stange, umfassend die Schritte, die bestehen aus:
- Kalandrieren der rohrförmigen Stange, um ihr eine kreisförmige Form zu geben;
- Einsetzen eines Verbindungselements (10) nach einem der Ansprüche 1 bis 6 in ein erstes der beiden gegenüberliegenden Enden (2) der rohrförmigen Stange, bis es von der Krümmung der Felge behindert wird;
- Einsetzen des Abschnitts des Verbindungselements (10), der von dem ersten Ende vorsteht, in das andere Ende der Felge;
- Aufbringen einer Schließkraft zum Schließen der Felge.

9. Verfahren nach Anspruch 8, wobei das Aufbringen eines Strukturklebers intern auf die Enden (2) der Felge und/oder auf die Außenfläche des Verbindungselements (10) vor dessen Einsetzen in die Enden vorgesehen ist.

## Revendications

1. Élément d'assemblage (10) pour des jantes de bicyclette (1) à profil tubulaire, apte à être inséré dans les extrémités (2) de la jante afin de permettre l'assemblage des celles-ci suite à l'application d'une force de fermeture, **caractérisé en ce qu'**il est réalisé en deux parties séparées (12) reliées par deux éléments de connexion transversaux (13) élastiquement déformables, présentant des parties centrales (14) respectives avec des concavités opposées.

2. Élément d'assemblage (10) selon la revendication 1, **caractérisé en ce qu'**il présente une géométrie parfaitement rectiligne.

3. Élément d'assemblage (10) selon la revendication 1 ou 2, **caractérisé en ce que** lesdites deux parties (12) sont parfaitement symétriques l'une par rapport à l'autre et reproduisent le profil intérieur de la cavité de jante (1).

4. Élément d'assemblage (10) selon l'une quelconque des revendications précédentes, **caractérisé en ce que** des rainures longitudinales (16) sont prévues sur les côtés (15) desdites deux parties (12) de l'élément (10).

5. Élément d'assemblage (10) selon l'une quelconque des revendications précédentes, **caractérisé en ce qu'**il est constitué d'une matière plastique.

6. Élément d'assemblage (10) selon la revendication 4 ou 5, dans lequel lesdites rainures longitudinales (16) sont adaptées pour recevoir une colle structurelle, telle qu'un adhésif à deux composants.

7. Jante de bicyclette (1) **caractérisée en ce qu'**elle présente un élément d'assemblage (10) selon l'une quelconque des revendications précédentes à ses extrémités assemblées (2).

8. Procédé de production d'une jante de bicyclette (1) à partie d'une barre tubulaire, comprenant les étapes suivantes :
- calandrage de la barre tubulaire pour lui donner une forme circulaire ;
- insertion d'un élément d'assemblage (10) selon l'une quelconque des revendications 1 à 6 dans une première des deux extrémités opposées (2) de la barre tubulaire, jusqu'à ce que celle-ci interfère avec la courbure de la jante ;
- insertion de la partie dudit élément d'assemblage (10) faisant saillie à partir de ladite première extrémité dans l'autre extrémité de la jante ;
- application d'une force de serrage pour fermer la jante.

9. Procédé selon la revendication 8, dans lequel l'application d'une colle structurelle est réalisée intérieurement sur les extrémités (2) de la jante et/ou sur la surface extérieure de l'élément d'assemblage (10) avant l'insertion de celui-ci dans lesdites extrémités.
